# EUROPÄISCHE PATENTSCHRIFT

(11) **EP 1 137 997 B1**
(45) Veröffentlichungstag und Bekanntmachung des Hinweises auf die Patenterteilung: **13.11.2002**
(21) Anmeldenummer: 99966827.0
(22) Anmeldetag: 01.12.1999
(51) Int. Cl.: G06F 13/36

(54) **MULTIMASTER-BUSSYSTEM UND VERFAHREN ZUM BETREIBEN DESSELBEN**
MULTI-MASTER BUS SYSTEM AND METHOD FOR OPERATING THE SAME
SYSTEME A BUS MULTI-MAITRE ET SON PROCEDE DE FONCTIONNEMENT

(30) Priorität: 07.12.1998 DE 19856403
(43) Veröffentlichungstag der Anmeldung: 04.10.2001
(73) Patentinhaber: Infineon Technologies AG, 81669 München (DE)
(72) Erfinder: WENZEL, Andreas, D-81373 München (DE)
(74) Vertreter: Jannig, Peter, Dipl.-Ing.
(86) Internationale Anmeldenummer: DE9903843
(87) Internationale Veröffentlichungsnummer: WO00034876

(56) Entgegenhaltungen:
- EP-A- 0 497 054
- US-A- 5 572 686
- PATENT ABSTRACTS OF JAPAN vol. 1999, no. 4, 30. April 1999 (1999-04-30) & JP 11 025035 A (OKI ELECTRIC IND CO LTD), 29. Januar 1999 (1999-01-29)

## Beschreibung

Die vorliegende Erfindung betrifft eine Vorrichtung gemäß dem Oberbegriff der Patentansprüche 1 bis 4, und ein Verfahren gemäß dem Oberbegriff der Patentansprüche 7 bis 10, d.h.
- ein Multimaster-Bussystem mit einem Bus und über den Bus verbindbaren Einheiten, wobei eine der Einheiten als Default-Master festlegbar ist, und wobei das Multimaster-Bussystem eine dynamisch veränderbare Default-Master-Festlegung gestattet, bzw.
- ein Verfahren zum Betreiben eines solchen Multimaster-Bussystems.

Ein Multimaster-Bussystem ist ein Bussystem, bei welchem während des Betriebes abwechselnd verschiedene der am Bus angeschlossenen Einheiten der Bus-Master sein können.

Von den Einheiten, die Bus-Master werden können, ist üblicherweise eine als Default-Bus-Master bzw. Default-Master festgelegt; diese Einheit ist immer dann der Bus-Master, wenn keine der andere Einheiten den Bus anfordert (Bus-Master sein möchte).

Solche Multimaster-Bussysteme sind seit langem in vielen verschiedenen Ausführungsformen bekannt und bedürfen keiner näheren Erläuterung. Weil abwechselnd verschiedene Einheiten der Bus-Master sein können, sind Bussysteme dieser Art sehr flexibel einsetzbar.

Die Erfahrung zeigt jedoch, daß sich selbst so flexibel einsetzbare Bussysteme nicht immer optimal an die jeweiligen Gegebenheiten anpassen lassen.

Der vorliegenden Erfindung liegt daher die Aufgabe zugrunde, ein Multimaster-Bussystem und ein Verfahren zu Betreiben desselben zu schaffen, welches es gestattet, das Multimaster-Bussystem unter allen Umständen optimal an die jeweiligen Gegebenheiten anzupassen.

Diese Aufgabe wird erfindungsgemäß durch die im kennzeichnenden Teil der Patentansprüche 1 bis 4 beanspruchten Merkmale (Vorrichtung) bzw. durch die im kennzeichnenden Teil der Patentansprüche 7 bis 10 beanspruchten Merkmale (Verfahren) gelöst.

Durch die beanspruchte Festlegung des Default-Masters bzw. eine entsprechende Veränderung der Default-Master-Festlegung läßt sich das Bussystem unter allen Umständen optimal an die gegebenen Verhältnisse anpassen; das das Bussystem enthaltende System kann dadurch maximal schnell und effizient arbeiten.

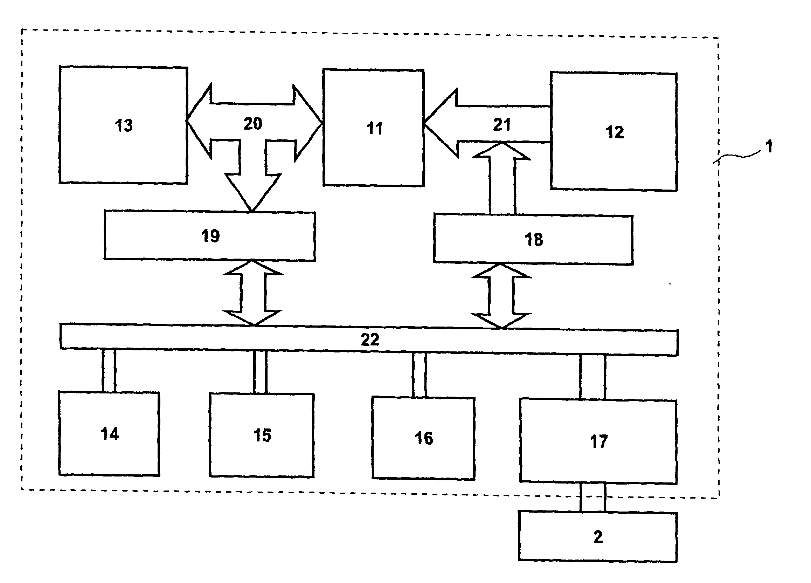

Vorteilhafte Weiterbildungen der Erfindung sind den Unteransprüchen, der folgenden Beschreibung und der Figur entnehmbar.

Die Erfindung wird nachfolgend anhand eines Ausführungsbeispiels unter Bezugnahme auf die Figur näher beschrieben.

Die Figur zeigt schematisch den Aufbau des nachfolgend näher beschriebenen Systems.

Das in der Figur gezeigte System ist ein einen Mikrocontroller (oder eine sonstige programmgesteuerte Einheit wie beispielsweise einen Mikroprozessor) enthaltendes System. Es umfaßt einen Mikrocontroller 1, und einen externen Speicher 2.

Der Mikrocontroller 1 umfaßt einen Core 11, einen Befehlsspeicher 12, einen Datenspeicher 13, eine erste Peripherie-Einheit 14, eine zweite Peripherie-Einheit 15, eine dritte Peripherie-Einheit 16, einen Buscontroller 17, eine zwischen einem zweiten Bus 21 und einem dritten Bus 22 vorgesehene Busprotokoll-Umsetzungseinheit (Instruction Bridge) 18, eine zwischen einem ersten Bus 20 und dem dritten Bus 22 vorgesehene Busprotokoll-Umsetzungseinheit (Data Bridge) 19, den ersten Bus 20, den zweiten Bus 21, und den dritten Bus 22, wobei
- der erste Bus 20 den Core 11, den Datenspeicher 13 und die Data Bridge 19 verbindet,
- der zweite Bus 21 den Core 11, den Befehlsspeicher 12 und die Instruction Bridge 18 verbindet, und
- der dritte Bus 22 die erste Peripherie-Einheit 14, die zweite Peripherie-Einheit 15, die dritte Peripherie-Einheit 16, und den Buscontroller 17, die Instruction Bridge 18, und die Data Bridge 19 verbindet.

Der Buscontroller 17 ist der Buscontroller für einen außerhalb des Mikrocontrollers 1 vorgesehenen externen Bus; an diesen externen Bus ist der externe Speicher 2 (und gegebenenfalls weitere externe Einheiten) angeschlossen.

Der externe Speicher 2 ist im betrachteten Beispiel ein externer Daten- und/oder Programmspeicher für den Mikrocontroller 1.

Vom Core 11 benötigte Befehlsdaten können wahlweise aus dem internen Befehlsspeicher 12 oder - über den zweiten Bus 21, die Instruction Bridge 18, den dritten Bus 22 und den Buscontroller 17 - aus dem externen Speicher 2 geholt werden.

Vom Core 11 veranlaßte Datentransfers können wahlweise den internen Datenspeicher 13 oder den externen Speicher 2 als Datenquelle und/oder Datenziel haben; zwischen dem Core 11 und dem externen Speicher 2 zu transferierende Daten werden über den ersten Bus 20, die Data Bridge 19, den dritten Bus 22, und den Buscontroller 17 geleitet.

Der dritte Bus 22 und die über diesen verbundenen Einheiten bilden das vorliegend besonders interessierende Bussystem. Es handelt sich um ein Multimaster-Bussystem und zeichnet sich dadurch aus, daß dynamisch einstellbar ist, welche der über den Bus verbundenen Einheiten der Default-Master sein soll.

D.h., von den über den dritten Bus 22 verbundenen Einheiten (erste Peripherie-Einheit 14, zweite Peripherie-Einheit 15, dritte Peripherie-Einheit 16, Buscontroller 17, Instruction Bridge 18, und Data Bridge 19) können mehrere oder alle Einheiten Bus-Master sein, und es ist während des Betriebes des Bussystems, also dynamisch einstellbar (veränderbar), welche der als Bus-Master verwendbaren Einheiten der Default-Master sein soll.

Die als Default-Master verwendete Einheit ist Bus-Master, wenn und so lange seitens der über den Bus verbundenen Einheiten keine Busanforderung vorliegt.

Die Einheit, die zu dem Zeitpunkt, zu dem sie den Bus benötigt, Bus-Master ist, hat den Vorteil, daß sie sofort, also ohne vorherige Busanforderung, den Bus benutzen kann. Eine Einheit, die zu dem Zeitpunkt, zu dem sie den Bus benötigt, nicht der Bus-Master ist, muß den Bus zunächst anfordern, wodurch der erforderliche Buszugriff um mindestens einen Buszyklus verzögert wird.

In der Regel wird diejenige Einheit als Default-Master festgelegt, die den Bus am häufigsten benötigt; dann kann diejenige Einheit, die den Bus am häufigsten benötigt, im Durchschnitt am schnellsten auf diesen zugreifen. Ein derartiges Bussystem arbeitet sehr effizient.

Die Effizienz eines solchen Bussystems läßt sich mit relativ geringem Aufwand erheblich steigern, indem wie im vorliegend betrachteten Beispiel eine dynamische Veränderbarkeit der Default-Master-Einstellung vorgesehen wird.

Die Vorteile, die sich durch eine dynamisch (während des Betriebes des Bussystems) veränderbare Default-Master-Einstellung gegenüber einer festen (während des Betriebes nicht veränderbaren) Default-Master-Einstellung erzielen lassen, werden nachfolgend anhand der Figur veranschaulicht.

Es sei zunächst angenommen, daß die Data Bridge 19 fest als Default-Master des dritten Busses 22 eingestellt ist. Dann kann die Data Bridge 19 in der Regel sofort auf den dritten Bus 22 zugreifen, wenn ein Datentransfer zwischen dem Core 11 und einer der am dritten Bus 22 angeschlossenen Einheiten durchgeführt werden muß. Derartige Datentransfers können mithin äußerst schnell und effizient ausgeführt werden. Im Gegensatz hierzu ist die Versorgung des Core 11 mit im externen Speicher 2 gespeicherten Befehlsdaten relativ aufwendig. Damit dem Core 11 aus dem externen Speicher 2 angeforderte Befehlsdaten zugeführt werden können, muß die Instruction Bridge 18 Bus-Master werden. Weil üblicherweise der Default-Master, im betrachteten Beispiel also die Data Bridge 19 der Bus-Master ist, muß die Instruction Bridge 18 den Bus zunächst anfordern. Erst wenn die Instruction Bridge 18 selbst Bus-Master ist und so Zugriff auf den dritten Bus 22 erhalten hat, kann sie im externen Speicher 2 gespeicherte Befehlsdaten zum Core 11 transferieren. Die durchzuführende Anforderung des dritten Busses 22 verzögert den Befehlsdaten-Transfer um mindestens einen Buszyklus. In der Praxis können zum Holen der einen Befehl repräsentierenden Daten auch mehr als ein Befehlsdaten-Transfer erforderlich sein. Dann verzögert sich das Holen der den betreffenden Befehl repräsentierenden Daten noch mehr. Die Instruction Bridge 18 muß den dritten Bus 22 nämlich für jeden Befehlsdaten-Transfer erneut anfordern, denn sobald die Instruction Bridge 18 den dritten Bus 22 nicht mehr benötigt, also nach jedem einzelnen Befehlsdaten-Transfer, wird automatisch wieder der Default-Master, also die Data Bridge 19 der Bus-Master. Der Befehlsdaten-Transfer könnte beschleunigt werden, indem die Instruction Bridge 18 als Default-Master für den dritten Bus 22 festgelegt wird. Dann ließen sich allerdings die über die Data Bridge 19 auszuführenden Datentransfers nicht mehr so schnell und effizient ausführen.

Nachteile dieser Art lassen sich durch die Anwendung einer dynamisch veränderbaren Default-Master-Einstellung verhindern. Dann kann nämlich jeweils gerade diejenige Einheit als Default-Master festgelegt werden, die den dritten Bus besonders häufig oder besonders schnell benötigt.

Welche Einheit zu einem jeweiligen Zeitpunkt vorzugsweise als Default-Master festgelegt wird, hängt von dem das betrachtete Bussystem enthaltenden System ab.

Die Default-Master-Festlegung kann beispielsweise in Abhängigkeit von in der Vergangenheit erfolgten Benutzungen des Busses durch die daran angeschlossenen Einheiten erfolgen. Zum Beispiel in Abhängigkeit davon wann und/oder wie oft und/oder wie lange die einzelnen Einheiten den Bus benutzten.

Dabei könnte beispielsweise vorgesehen werden, daß jeweils diejenige Einheit als Default-Master festgelegt wird, die den Bus zuletzt benutzt hat.

Statt dessen könnte beispielsweise auch vorgesehen werden, daß jeweils diejenige Einheit als Default-Master festgelegt wird, die in einem vorbestimmten vorangehenden Zeitraum den Bus am häufigsten benötigte.

Es könnte auch jeweils diejenige Einheit als Default-Master festgelegt werden, von der zu erwarten ist, daß sie in der nächsten Zeit besonders häufig und/oder besonders schnell auf den Bus zugreifen müssen wird. Solche Vorhersagen lassen sich beispielsweise unter Verwendung von Analysen des tatsächlichen oder zu erwartenden Programmablaufs im Mikrocontroller 1 (oder einer sonstigen den Bus benötigenden programmgesteuerten Einheit oder Teileinheit) treffen.

Es dürfte einleuchten, daß die Festlegung des jeweiligen Default-Masters von beliebigen Kriterien und Parametern abhängig gemacht werden kann, wobei es auch zulässig ist, daß sich die Kriterien und die Parameter, in Abhängigkeit von welchen die Default-Master-Festlegung erfolgt, selbst ändern können.

Eine derartige Default-Master-Festlegung läßt sich auch bei Multiprozessorsystemen, genauer gesagt bei einem mehrere programmgesteuerte Einheiten verbindenden Bussystem anwenden.

Die beschriebene Default-Master-Festlegung läßt sich auch bei Bussystemen anwenden, die nicht Bestandteil von programmgesteuerten Einheiten und/oder programmgesteuerte Einheiten enthaltenden Systemen sind.

Die dynamisch veränderbare Default-Master-Festlegung erweist sich in mehrfacher Hinsicht als vorteilhaft: einerseits läßt sich ein dazu ausgelegtes Bussystem unter allen Umständen optimal an die jeweiligen Verhältnisse anpassen, und andererseits steigt dadurch die Leistungsfähigkeit (Performance) des das betreffende Bussystem enthaltenden Systems.

## Patentansprüche

1. Multimaster-Bussystem mit einem Bus (22) und über den Bus verbindbaren Einheiten (14 bis 19), wobei eine der Einheiten als Default-Master festlegbar ist, und wobei das Multimaster-Bussystem eine dynamisch veränderbare Default-Master-Festlegung gestattet,
**dadurch gekennzeichnet,**
**daß** die Default-Master-Festlegung in Abhängigkeit davon erfolgt, wann und/oder wie oft und/oder wie lange die einzelnen Einheit(en) (14 bis 19) den Bus (22) benutzten.

2. Multimaster-Bussystem mit einem Bus (22) und über den Bus verbindbaren Einheiten (14 bis 19), wobei eine der Einheiten als Default-Master festlegbar ist, und wobei das Multimaster-Bussystem eine dynamisch veränderbare Default-Master-Festlegung gestattet,
**dadurch gekennzeichnet,**
**daß** diejenige Einheit (14 bis 19) als Default-Master festgelegt wird, die den Bus (22) zuletzt benutzt hat.

3. Multimaster-Bussystem mit einem Bus (22) und über den Bus verbindbaren Einheiten (14 bis 19), wobei eine der Einheiten als Default-Master festlegbar ist, und wobei das Multimaster-Bussystem eine dynamisch veränderbare Default-Master-Festlegung gestattet,
**dadurch gekennzeichnet,**
**daß** diejenige Einheit (14 bis 19) als Default-Master festgelegt wird, die den Bus (22) in einem vorbestimmten Zeitraum in der Vergangenheit am häufigsten benötigte.

4. Multimaster-Bussystem mit einem Bus (22) und über den Bus verbindbaren Einheiten (14 bis 19), wobei eine der Einheiten als Default-Master festlegbar ist, und wobei das Multimaster-Bussystem eine dynamisch veränderbare Default-Master-Festlegung gestattet,
**dadurch gekennzeichnet,**
**daß** diejenige Einheit (14 bis 19) als Default-Master festgelegt wird, von der zu erwarten ist, daß sie besonders häufig und/oder besonders schnell auf den Bus (22) zugreifen müssen wird.

5. Multimaster-Bussystem nach Anspruch 4,
**dadurch gekennzeichnet,**
**daß** die Default-Master-Festlegung in Abhängigkeit von einer Analyse des tatsächlichen oder des zu erwartenden Programmablaufs in einer die Buszugriffe benötigenden programmgesteuerten Einheit (1) erfolgt.

6. Multimaster-Bussystem nach einem der vorherhegenden Ansprüche,
**dadurch gekennzeichnet,**
**daß** die Kriterien und die Parameter, in Abhängigkeit von welchen die Default-Master-Festlegung erfolgt, variiert werden.

7. Verfahren zum Betreiben eines Multimaster-Bussystems mit einem Bus (22) und über den Bus verbindbaren Einheiten (14 bis 19), wobei eine der Einheiten als Default-Master festlegbar ist, und wobei die Default-Master-Festlegung dynamisch veränderbar ist,
**dadurch gekennzeichnet,**
**daß** die Default-Master-Festlegung in Abhängigkeit davon erfolgt, wann und/oder wie oft und/oder wie lange die einzelnen Einheit(en) (14 bis 19) den Bus (22) benutzten.

8. Verfahren zum Betreiben eines Multimaster-Bussystems mit einem Bus (22) und über den Bus verbindbaren Einheiten (14 bis 19), wobei eine der Einheiten als Default-Master festlegbar ist, und wobei die Default-Master-Festlegung dynamisch veränderbar ist,
**dadurch gekennzeichnet,**
**daß** diejenige Einheit (14 bis 19) als Default-Master festgelegt wird, die den Bus (22) zuletzt benutzt hat.

9. Verfahren zum Betreiben eines Multimaster-Bussystems mit einem Bus (22) und über den Bus verbindbaren Einheiten (14 bis 19), wobei eine der Einheiten als Default-Master festlegbar ist, und wobei die Default-Master-Festlegung dynamisch veränderbar ist,
**dadurch gekennzeichnet,**
**daß** diejenige Einheit (14 bis 19) als Default-Master festgelegt wird, die den Bus (22) in einem vorbestimmten Zeitraum in der Vergangenheit am häufigsten benötigte.

10. Verfahren zum Betreiben eines Multimaster-Bussystems mit einem Bus (22) und über den Bus verbindbaren Einheiten (14 bis 19), wobei eine der Einheiten als Default-Master festlegbar ist, und wobei die Default-Master-Festlegung dynamisch veränderbar ist,
**dadurch gekennzeichnet,**
**daß** diejenige Einheit (14 bis 19) als Default-Master festgelegt wird, von der zu erwarten ist, daß sie besonders häufig und/oder besonders schnell auf den Bus (22) zugreifen müssen wird.

11. Verfahren nach Anspruch 10,
**dadurch gekennzeichnet,**
**daß** die Default-Master-Festlegung in Abhängigkeit von einer Analyse des tatsächlichen oder des zu erwartenden Programmablaufs in einer die Buszugriffe benötigenden programmgesteuerten Einheit (1) erfolgt.

12. Verfahren nach einem der Ansprüche 7 bis 11,
**dadurch gekennzeichnet,**
**daß** die Kriterien und die Parameter, in Abhängigkeit von welchen die Default-Master-Festlegung erfolgt, variiert werden.

## Claims

1. Multimaster bus system having a bus (22) and units (14 to 19) which can be connected via the bus, where one of the units can be stipulated as the default master, and where the multimaster bus system permits dynamically alterable default-master stipulation,
**characterized**
**in that** the default master is stipulated on the basis of when and/or how often and/or for how long the individual unit(s) (14 to 19) have used the bus (22).

2. Multimaster bus system having a bus (22) and units (14 to 19) which can be connected via the bus, where one of the units can be stipulated as the default master, and where the multimaster bus system permits dynamically alterable default-master stipulation,
**characterized**
**in that** that unit (14 to 19) which used the bus (22) last is stipulated as the default master.

3. Multimaster bus system having a bus (22) and units (14 to 19) which can be connected via the bus, where one of the units can be stipulated as the default master, and where the multimaster bus system permits dynamically alterable default-master stipulation,
**characterized**
**in that** that unit (14 to 19) which has required the bus (22) most frequently in a predetermined period of time in the past is stipulated as the default master.

4. Multimaster bus system having a bus (22) and units (14 to 19) which can be connected via the bus, where one of the units can be stipulated as the default master, and where the multimaster bus system permits dynamically alterable default-master stipulation,
**characterized**
**in that** that unit (14 to 19) which can be expected to need to access the bus (22) particularly frequently and/or particularly quickly is stipulated as the default master.

5. Multimaster bus system according to Claim 4,
**characterized**
**in that** the default master is stipulated on the basis of an analysis of the actual program cycle or of the program cycle which can be expected in a program-controlled unit (1) which needs bus access.

6. Multimaster bus system according to one of the preceding claims,
**characterized**
**in that** the criteria and the parameters on the basis of which the default master is stipulated are varied.

7. Method for operating a multimaster bus system having a bus (22) and units (14 to 19) which can be connected via the bus, where one of the units can be stipulated as the default master, and where the default-master stipulation can be altered dynamically,
**characterized**
**in that** the default master is stipulated on the basis of when and/or how often and/or for how long the individual unit(s) (14 to 19) have used the bus (22).

8. Method for operating a multimaster bus system having a bus (22) and units (14 to 19) which can be connected via the bus, where one of the units can be stipulated as the default master, and where the default-master stipulation can be altered dynamically,
**characterized**
**in that** that unit (14 to 19) which used the bus (22) last is stipulated as the default master.

9. Method for operating a multimaster bus system having a bus (22) and units (14 to 19) which can be connected via the bus, where one of the units can be stipulated as the default master, and where the default-master stipulation can be altered dynamically,
**characterized**
**in that** that unit (14 to 19) which has required the bus (22) most frequently in a predetermined period of time in the past is stipulated as the default master.

10. Method for operating a multimaster bus system having a bus (22) and units (14 to 19) which can be connected via the bus, where one of the units can be stipulated as the default master, and where the default-master stipulation can be altered dynamically,
**characterized**
**in that** that unit (14 to 19) which can be expected to need to access the bus (22) particularly frequently and/or particularly quickly is stipulated as the default master.

11. Method according to Claim 10,
**characterized**
**in that** the default master is stipulated on the basis of an analysis of the actual program cycle or of the program cycle which can be expected in a program-controlled unit (1) which needs bus access.

12. Method according to one of Claims 7 to 11,
**characterized**
**in that** the criteria and the parameters on the basis of which the default master is stipulated are varied.

## Revendications

1. Système de bus multi-maîtres comprenant un bus (22) et des unités (14 à 19) pouvant être connectées par le biais du bus, l'une des unités pouvant être définie comme maître par défaut, et le système de bus multi-maîtres permettant une définition modifiable de manière dynamique du maître par défaut, **caractérisé en ce que** la définition du maître par défaut est effectuée en fonction de l'instant et/ou de la fréquence et/ou de la longueur d'utilisation du bus (22) par chacune des unités (14 à 19).

2. Système de bus multi-maîtres comprenant un bus (22) et des unités (14 à 19) pouvant être connectées par le biais du bus, l'une des unités pouvant être définie comme maître par défaut, et le système de bus multi-maîtres permettant une définition modifiable de manière dynamique du maître par défaut, **caractérisé en ce que** l'unité (14 à 19) qui est définie comme maître par défaut est celle qui a utilisé le bus (22) en dernier.

3. Système de bus multi-maîtres comprenant un bus (22) et des unités (14 à 19) pouvant être connectées par le biais du bus, l'une des unités pouvant être définie comme maître par défaut, et le système de bus multi-maîtres permettant une définition modifiable de manière dynamique du maître par défaut, **caractérisé en ce que** l'unité (14 à 19) qui est définie comme maître par défaut est celle qui a utilisé le bus (22) le plus souvent pendant une période donnée dans le passé.

4. Système de bus multi-maîtres comprenant un bus (22) et des unités (14 à 19) pouvant être connectées par le biais du bus, l'une des unités pouvant être définie comme maître par défaut, et le système de bus multi-maîtres permettant une définition modifiable de manière dynamique du maître par défaut, **caractérisé en ce que** l'unité (14 à 19) qui est définie comme maître par défaut est celle qui est supposée devoir accéder relativement fréquemment et/ou relativement rapidement au bus (22).

5. Système de bus multi-maîtres selon la revendication 4, **caractérisé en ce que** la définition du maître par défaut est effectuée en fonction d'une analyse du déroulement réel ou attendu du programme dans une unité programmable (1) qui a besoin de l'accès au bus.

6. Système de bus multi-maîtres selon l'une des revendications précédentes, **caractérisé en ce que** les critères et les paramètres en fonction desquels est défini le maître par défaut peuvent varier.

7. Procédé destiné à faire fonctionner un système de bus multi-maîtres comprenant un bus (22) et des unités (14 à 19) pouvant être connectées par le biais du bus, l'une des unités pouvant être définie comme maître par défaut, et la définition du maître par défaut pouvant être modifiée de manière dynamique, **caractérisé en ce que** la définition du maître par défaut est effectuée en fonction de l'instant et/ou de la fréquence et/ou de la longueur d'utilisation du bus (22) par chacune des unités (14 à 19).

8. Procédé destiné à faire fonctionner un système de bus multi-maîtres comprenant un bus (22) et des unités (14 à 19) pouvant être connectées par le biais du bus, l'une des unités pouvant être définie comme maître par défaut, et la définition du maître par défaut pouvant être modifiée de manière dynamique, **caractérisé en ce que** l'unité (14 à 19) qui est définie comme maître par défaut est celle qui a utilisé le bus (22) en dernier.

9. Procédé destiné à faire fonctionner un système de bus multi-maîtres comprenant un bus (22) et des unités (14 à 19) pouvant être connectées par le biais du bus, l'une des unités pouvant être définie comme maître par défaut, et la définition du maître par défaut pouvant être modifiée de manière dynamique, **caractérisé en ce que** l'unité (14 à 19) qui est définie comme maître par défaut est celle qui a utilisé le bus (22) le plus souvent pendant une période donnée dans le passé.

10. Procédé destiné à faire fonctionner un système de bus multi-maîtres comprenant un bus (22) et des unités (14 à 19) pouvant être connectées par le biais du bus, l'une des unités pouvant être définie comme maître par défaut, et la définition du maître par défaut pouvant être modifiée de manière dynamique, **caractérisé en ce que** l'unité (14 à 19) qui est définie comme maître par défaut est celle qui est supposée devoir accéder relativement fréquemment et/ou relativement rapidement au bus (22).

11. Procédé selon la revendication 10, **caractérisé en ce que** la définition du maître par défaut est effectuée en fonction d'une analyse du déroulement réel ou attendu du programme dans une unité programmable (1) qui a besoin de l'accès au bus.

12. Procédé selon l'une des revendications 7 à 11, **caractérisé en ce que** les critères et les paramètres en fonction desquels est défini le maître par défaut peuvent varier.
